# EUROPÄISCHE PATENTANMELDUNG

(11) **EP 1 138 457 A2**
(43) Veröffentlichungstag der Anmeldung: **04.10.2001**
(21) Anmeldenummer: 01107689.0
(22) Anmeldetag: 28.03.2001
(51) Int. Cl.: B29C 45/17

(54) **Vorrichtung und Verfahren zur Herstellung eines Lager- oder Transportbehälters oder einer Palette aus Kunststoff**

(30) Priorität: 28.03.2000 DE 10015313
(71) Anmelder: BITO-LAGERTECHNIK BITTMANN GmbH, D-55590 Meisenheim (DE)
(72) Erfinder: Haben, Manfred, 66625 Nohfelden (DE)
(74) Vertreter: Hano, Christian, Dipl.-Ing.

(57) **Zusammenfassung**

Die Vorrichtung zur Herstellung eines Lager- oder Transportbehälters oder einer Palette aus Kunststoff mit geschlossenen Hohlräumen (22) in wenigstens einer Boden-oder Seitenwand (20; 16, 18), umfasst einen ersten Werkzeugteil (34) und einen zweiten Werkzeugteil (36), zwischen denen in geschlossenem Zustand ein Spritzraum (40) gebildet wird. In dem ersten Werkzeugteil (34) sind mehrere Schieber (42) verschiebbar gelagert, die sich in einer Ausfahrstellung in den Spritzraum (40) erstrecken und in einer Einzugsstellung in das erste Werkzeugteil (34) eingezogen sind, wobei benachbarte Schieber (42) in der Ausfahrstellung jeweils durch einen Nebenkanal (50) getrennt sind und die Nebenkanäle (50) in einen an die Schieber (42) angrenzenden gemeinsamen Gasverteilerkanal (48) münden. Eine Druckgaseinrichtung, die wenigstens eine Gasnadel (68) aufweist, erstreckt sich in einer Einblasstellung in den Gasverteilerkanal (48).

## Beschreibung

Die Erfindung betrifft eine Vorrichtung zur Herstellung eines Lager- oder Transportbehälters oder einer Palette aus Kunststoff mit geschlossenen Hohlräumen in wenigstens einer Boden- oder Seitenwand, nach dem Oberbegriff des des Patentanspruchs 1 sowie ein Verfahren zur Herstellung eines Lager-oder Transportbehälters oder einer Palette aus Kunststoff mit geschlossenen Hohlräumen in wenigstens einer Boden- oder Seitenwand mit dieser Vorrichtung.

Aus dem DE 94 21 487 U1 ist ein Verfahren zur Herstellung eines Lager-oder Transportbehälters bekannt, bei dem der Spritzraum in einem Spritzgusswerkzeug, in dem die entsprechende Boden- oder Seitenwand ausgebildet wird, vollständig mit plastifiziertem Kunststoffmaterial ausgefüllt wird. Anschließend wird durch gezieltes Einblasen von Gas unter Druck in den Spritzraum ein Hohlraum gebildet. Die Hohlräume erstrecken sich über die gesamte Länge oder Breite der Boden- oder Seitenwand, wobei ein einziger Hohlraum oder mehrere parallel zueinander angeordnete Hohlräume vorgesehen sind.

Die Form des entsprechenden Spritzraumabschnittes entspricht der Form der Boden- bzw. Seitenwand des fertig hergestellten Kunststoffbehälters. Da der Spritzraum zur Herstellung des Kunststoffbehälters vollkommen mit Kunststoffmaterial gefüllt wird, muß das Kunststoffmaterial bei der Einblasung des Gases zur Bildung der Hohlräume komprimiert werden. Diese Komprimierung ist nur bis zu einem bestimmten Maße möglich, so daß die Hohlraumwände eine erhöhte Dicke aufweisen. Hierdurch wird der Materialaufwand sowie das Gewicht des Kunststoffbehälters erhöht. Außerdem ist ein hoher Druck zur Bildung der Hohlräume erforderlich.

Aus der DE 195 18 153 A1 ist eine Vorrichtung zur Herstellung eines Lager-oder Transportbehälters mit geschlossenen Hohlräumen in der Bodenwand bekannt, die ein erstes Werkzeugteil und ein zweites Werkzeugteil umfasst, zwischen denen in geschlossenem Zustand ein Spritzraum gebildet wird. Ein Schieber erstreckt sich in einer Ausfahrstellung in den Spritzraum und ist in einer Einzugsstellung in das erste Werkzeugteil eingezogen. Gasnadeln einer Druckgaseinrichtung stechen zur Einblasung von Gas in den Spritzraum beispielsweise an Injektionsstellen ein, die jeweils einer einzelnen Kammer des Bodens zugeordnet sind.

Die DE 196 35 954 A1 beschreibt eine Vorrichtung zur Herstellung eines Kunststoffspritzteils mit einer hohlen Dickstelle, bei der in einem Werkzeugteil mehrere nebeneinander angeordnete Schieber vorgesehen sind. Benachbarte Schieber sind durch einen Nebenkanal voneinander getrennt. In den Spritzraum münden etwa in der Mitte der unteren Stirnfläche jedes Schiebers Gasdüsen.

Der Erfindung liegt die Aufgabe zugrunde, eine konstruktiv einfache Vorrichtung sowie ein zuverlässiges Verfahren bereitzustellen, die es ermöglichen, einen Lager- oder Transportbehälter oder eine Palette aus Kunststoff mit hoher Stabilität und geringem Gewicht auf einfache Weise herzustellen.

Diese Aufgabe wird durch eine Vorrichtung und ein Verfahren nach den Patentansprüchen 1 bzw. 5 gelöst.

Vorteilhafte Weiterbildungen der erfindungsgemäßen Vorrichtung sind Gegenstand der Patentansprüche 2 bis 4.

Bei der erfindungsgemäßen Vorrichtung wird durch das Einziehen der Schieber ein zusätzlicher Raum für die Bildung der Hohlräume gebildet, so daß das Kunststoffmaterial nicht komprimiert werden muß. Das Kunststoffmaterial kann sich mit relativ dünner Wandstärke an die Innenwände des Hohlraums anlegen. Da das Druckgas über die wenigstens eine Gasnadel in den an die Schieber angrenzenden Gasverteilerkanal eingeführt wird, ist es möglich, die Hohlräume mit einer relativ geringen Anzahl von Gasnadeln auszubilden, so daß die Vorrichtung konstruktiv einfach ist. Aufgrund des Gaskanals muss nicht jedem Hohlraum eine Gasnadel zugeordnet werden. Es kann ggf. ausreichen, mit einer einzigen Gasnadel Druckgas in den Gasverteilerkanal einzublasen. Ein Gasdurchschlag vom Gasverteilerkanal zu dem entsprechendem Hohlraum kann nach Einziehen des jeweiligen Schiebers erfolgen.

Die Erfindung wird nachstehend anhand von Zeichnungen näher erläutert. Es zeigen:
- Fig. 1: eine Unteransicht eines spritzgegossenen Lager- oder Transportbehälters;
- Fig. 2: den Schnitt II-II von Fig. 1;
- Fig. 3: einen Teilquerschnitt eines Spritzgußwerkzeuges;
- Fig. 4: das Spritzgußwerkzeug von Fig. 3 während eines ersten Verfahrensschrittes;
- Fig. 5: das Spritzgußwerkzeug von Fig. 3 während eines zweiten Verfahrensschrittes;
- Fig. 6: das Spritzgußwerkzeug von Fig. 3 während eines dritten Verfahrenssch rittes;
- Fig. 7: das Spritzgußwerkzeug von Fig. 3 während eines vierten Verfahrensschrittes, und
- Fig. 8: den Schnitt VIII-VIII von Fig. 3.

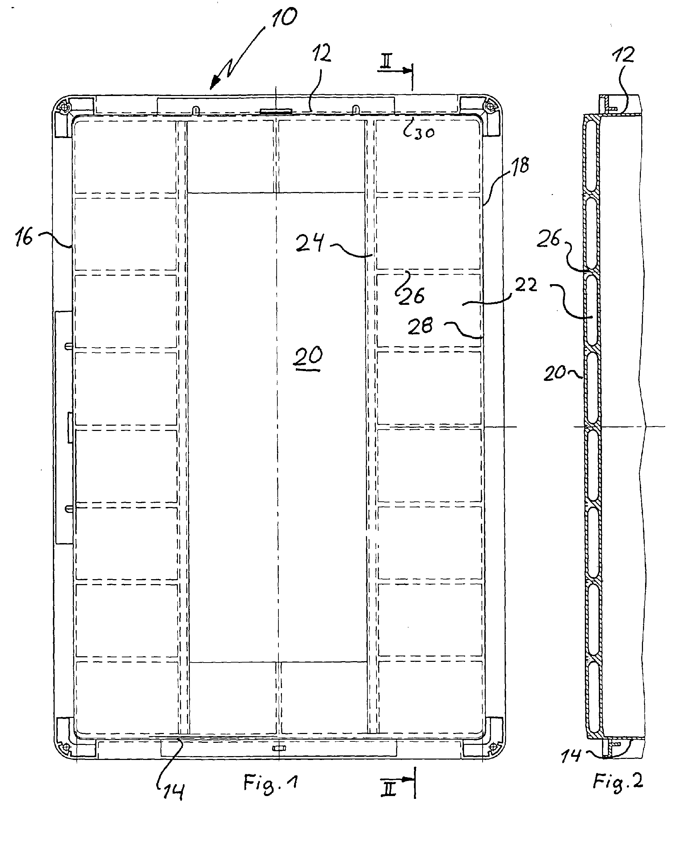

Der in den Fig. 1 und 2 gezeigte Lager- oder Transportbehälter 10 aus Kunststoff weist zwei gegenüberliegende Querseitenwände 12, 14 und zu diesen senkrecht verlaufende gegenüberliegende Längsseitenwände 16, 18 sowie eine Bodenwand 20 auf. Angrenzend an jede Längsseitenwand 16, 18 ist innerhalb der Bodenwand 20 eine Reihe von Hohlräumen 22 vorgesehen, die von der Bodenseite aus gesehen einen im wesentlichen rechteckigen Querschnitt aufweisen. Benachbarte Hohlräume 22 sind jeweils durch einen Quersteg 26 voneinander getrennt. Auf der von dem entsprechenden Längsrand 16, 18 abgewandten Seite sind die Hohlräume 22 durch einen parallel zur Längsseitenwand 16, 18 zwischen den beiden Querseitenwänden 12, 14 verlaufenden Längssteg 24 begrenzt. Die Begrenzung der Hohlräume 22 entlang des Längsseitenrandes 16 bzw. 18 wird durch einen Längsrandsteg 28 gebildet. Die im Eckbereich vorgesehenen Hohlräume 22 werden an den Querseitenwänden 12, 14 durch einen Querrandsteg 30 begrenzt.

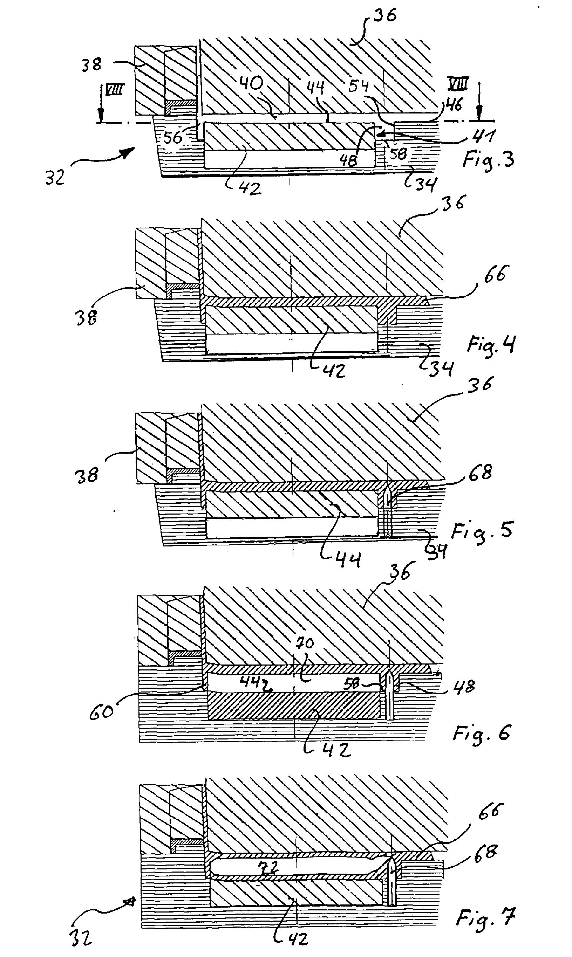

Der in den Fig. 1 und 2 gezeigte Lager- und Transportbehälter aus Kunststoff 10 wird mit einem Spritzgußwerkzeug 32 hergestellt, dessen Bereich, in dem die Hohlräume 22 des Lager- und Transportbehälters 10 gebildet werden, in den Fig. 3 bis 8 gezeigt ist. In diesem Bereich weist das Spritzgußwerkzeug 32 einen unteren Werkzeugteil 34, einen oberen Werkzeugteil 36 sowie einen seitlichen Werkzeugteil 38 auf, zwischen denen ein Spritzraum 40 gebildet ist, in dem der Boden 20 sowie eine Längsseitenwand 16, 18 durch Spritzguß ausgebildet werden.

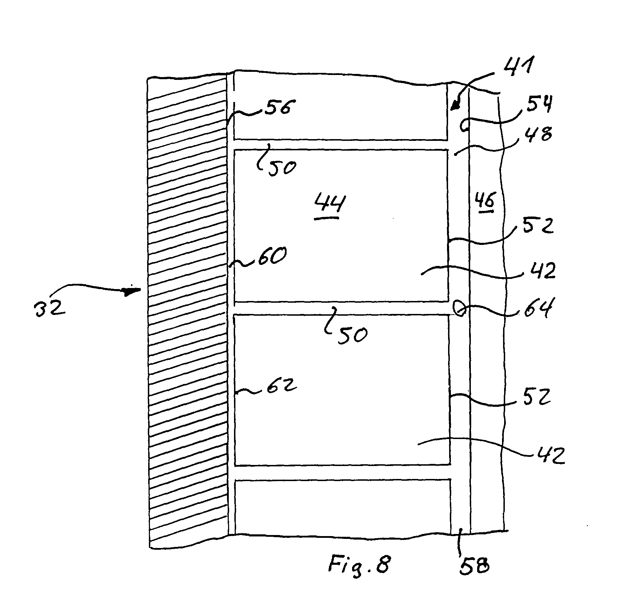

In den Fig. 3 und 8 ist das Spritzgußwerkzeug 32 in seiner Ausgangsstellung gezeigt.

In dem unteren Werkzeugteil 34 ist eine Aussparung mit zwei parallelen Längsseitenwänden 54, 56 und einem Boden 58 ausgebildet. Die Aussparung 41 befindet sich in dem Bereich, in dem die Reihe von Hohlräumen 22 des Lager- und Transportbehälters 10 ausgebildet werden. An den Positionen jedes Hohlraums 22 ist innerhalb der Aussparung 41 jeweils ein quaderförmiger Schieber 42 senkrecht zur Oberfläche 46 des unteren Werkzeugteils 34 verschiebbar gelagert. Die obere Oberfläche 44 des Schiebers 42 befindet sich in der in den Fig. 3 und 8 gezeigten Ausgangsstellung des Spritzwerkzeuges 32 bündig zur oberen Oberfläche 46 des unteren Werkzeugteils 34 und im Abstand zum oberen Werkzeugteil 36. Durch die nebeneinander angeordneten Schieber 42 werden Nebenkanäle 50 gebildet, die zwischen benachbarten Schiebern 42 ausgebildet sind. Alle Nebenkanäle 50 münden in einen gemeinsamen Gasverteilerkanal 48, der durch die innenliegenden Seitenwände 52 der Schieber 42, der Seitenwand 54 und dem Boden 58 gebildet wird. Auf der äußeren Seite münden die Nebenkanäle 50 in einen Randkanal 60, der durch die äußere Seitenwand 62 des Schiebers 42, die äußere Seitenwand 56 der Aussparung 41 sowie durch den Boden 58 gebildet wird. In dem Gasverteilerkanal 48 ist wenigstens eine Gasnadeldurchführungsöffnung 64 angeordnet, die in den Boden 58 der Aussparung mündet.

Wenn sich das Spritzwerkzeug 32 in der in den Fig. 3 und 8 gezeigten Stellung befindet, wird plastifiziertes Kunststoffmaterial 66 in den Spritzraum 40 unter Druck zugeführt, wobei der gesamte Spritzraum 40 einschließlich der Nebenkanäle 50 des Randkanals 60 des Gasverteilungskanals 48 vollkommen mit Kunststoffmaterial 66 gefüllt wird, wie es in Fig. 4 gezeigt wird.

Anschließend wird durch die Gasnadeldurchführungsöffnung 64 eine Gasnadel 68 in den Gasverteilungskanal 48 eingeführt (Fig. 5).

Jetzt werden, wie es in Fig. 6 gezeigt ist, die Schieber 42 nach unten bewegt, bis die Oberfläche 44 bündig zur Oberfläche 58 der Aussparung 51 ist. Hierdurch wird oberhalb des Schiebers 42 ein Luftraum 70 gebildet, da das plastifizierte Kunststoffmaterial weiter an der Unterseite des oberen Werkzeugteils 36 anliegt und in dem Gasverteilungskanal 48 und dem Randkanal 60 sowie in den Kanälen 50 verbleibt.

Anschließend wird über die Gasnadel 68 ein Gas mit hohem Druck in den Gasverteilungskanal 48 eingeführt. Die Spitze der Gasnadel 68 befindet sich im Kunstoffmaterial auf Höhe des Spaltes zwischen dem oberen Werkzeugteil 36 und dem unteren Werkzeugteil 34. Durch Einführung des Druckgases wird in dem Kunststoffmaterial ein Hohlraum 72 gebildet, der durch das Kunststoffmaterial in den Nebenkanälen 50, dem Randkanal 60 und in dem Gasverteilungskanal 48 sowie das Kunststoffmaterial begrenzt wird, das sich an der Oberseite 54 des Schiebers 42 anlegt. Dies wird in Fig. 7 gezeigt.

Nach Abkühlung des Kunststoffmaterials 66 wird das Spritzwerkzeug 32 geöffnet und der fertige Lager- oder Transportbehälter 10 aus dem Spritzwerkzeug 32 herausgenommen.

## Patentansprüche

1. Vorrichtung zur Herstellung eines Lager- oder Transportbehälters oder einer Palette aus Kunststoff mit geschlossenen Hohlräumen (22) in wenigstens einer Boden- oder Seitenwand (20; 16, 18), mit
- einem ersten Werkzeugteil (34) und einem zweiten Werkzeugteil (36), zwischen denen in geschlossenem Zustand ein Spritzraum (40) gebildet wird,
- mit einer Schiebereinrichtung, die sich in einer Ausfahrstellung in den Spritzraum (40) erstreckt und in einer Einzugsstellung in das erste Werkzeugteil (34) eingezogen ist, und
- mit einer Druckgaseinrichtung, die wenigstens eine Gasnadel (68) zur Einblasung von Gas in den Spritzraum (40) aufweist,
**dadurch gekennzeichnet, dass**
- die Schiebereinrichtung mehrere in dem ersten Werkzeugteil (34) verschiebbar gelagerte Schieber (42) umfasst, die sich in der Ausfahrstellung in den Spritzraum (40) erstrecken und in der Einzugsstellung in das erste Werkzeugteil (34) eingezogen sind, wobei benachbarte Schieber (42) in der Ausfahrstellung jeweils durch einen Nebenkanal (50) getrennt sind und die Nebenkanäle (50) in einen an die Schieber (42) angrenzenden gemeinsamen Gasverteilerkanal (48) münden, und
- sich die wenigstens eine Gasnadel (68) in einer Einblasstellung in den Gasverteilerkanal (48) erstreckt.

2. Vorrichtung nach Anspruch 1, **dadurch gekennzeichnet, daß** sich die Schieber (42) in ihrer Ausfahrstellung in einer Ebene in den Spritzraum (40) erstrecken.

3. Vorrichtung nach Anspruch 1 oder 2, **dadurch gekennzeichnet, daß** die Druckgaseinrichtung mehrere Gasnadeln (68) aufweist, die sich in gleichmäßigen Abständen in den Gasverteilerkanal (48) erstrecken.

4. Vorrichtung nach einem der vorhergehenden Ansprüche, **dadurch gekennzeichnet, daß** die Schieber (42) in parallelen Reihen angeordnet sind.

5. Verfahren zur Herstellung eines Lager- oder Transportbehälters oder einer Palette aus Kunststoff mit geschlossenen Hohlräumen (22) in wenigstens einer Boden- oder Seitenwand (20; 16, 18) mit der Vorrichtung nach einem der Ansprüche 1 bis 4, **dadurch gekennzeichnet, daß**
- plastifiziertes Kunstoffmaterial (66) in den Spritzraum (40) eingespritzt wird, wenn sich die Schieber (42) in der Ausfahrstellung befinden, so **daß** die Nebenkanäle (50) und der gemeinsame Gasverteilerkanal (48) mit Kunstoffmaterial gefüllt werden,
- die wenigstens eine Gasnadel (68) der Druckgaseinrichtung in das Kunststoffmaterial in dem Gasverteilerkanal (48) eingeführt wird,
- Druckgas über die wenigstens eine Gasnadel (68) eingeblasen wird, wobei die Schieber (42) gleichzeitig mit oder unmittelbar vor der Einblasung des Druckgases in ihre Einzugstellung eingezogen werden.

6. Lager-oder Transportbehälter aus Kunststoff hergestellt durch das Verfahren nach Anspruch 5.

7. Palette aus Kunstoff hergestellt durch das Verfahren nach Anspruch 5.
